# EUROPEAN PATENT SPECIFICATION

(11) **EP 0 812 726 B1**
(45) Date of publication and mention of the grant of the patent: **22.08.2001**
(21) Application number: 97850093.2
(22) Date of filing: 11.06.1997
(51) Int. Cl.: B60P 3/05

(54) **An arrangement for hanging loads in transport cabinets**
Vorrichtung für hängende Lasten in Transportkästen
Dispositif pour charges suspendues dans un conteneur de transport

(30) Priority: 12.06.1996 SE 9602320
(43) Date of publication of application: 17.12.1997
(73) Proprietor: Sandströms Transportprodukter AB, 975 91 Lulea (SE)
(72) Inventor: Sandström, Holger, 975 91 Lulea (SE)
(74) Representative: Örtenblad, Bertil Tore

(56) References cited:
- DE-A- 1 530 765
- DE-U- 8 517 926
- GB-A- 2 215 699
- US-A- 3 102 496
- US-A- 4 277 095

## Description

The present invention relates to an arrangement for hanging loads in transport cabinets intended for trucks and truck trailers.

More specifically, the invention relates to tubular rail-like structures from which loads in the form of animal carcasses can be hung in refrigerator and freezer transportation cabinets, according to the characteristics of the preamble of independent claim 1. Such tubular rail-like structures are well known in the art.

Such cabinets are normally given an internal ceiling height of about 2,300 mm and fitted with fixedly mounted tubular rail-like structures that hang from ceiling-mounted attachments. The internal ceiling height of 2,300 mm is chosen so that the tubular rails will be located at a height above the floor that will enable the load to be easily handled.

The transport vehicles will often carry a hanging load in one transport direction and be loaded with some other type of goods for the return journey. Because the tubular rail structure is fixedly mounted, the height available will correspond to the available distance from the floor of the vehicle to the tubular rail structure.

GB-A-2,215,699 disclosed a conveyor system on the underside of a roof structure of a container body comprising an overhead conveyor trail carrying a wheel suspended trolley. The conveyor system can be folded up to be located against said ceiling because the conveyor system has a width, which is much smaller than the width of the container body.

US-A-4,277,095 representing the closest prior art shows a conventional fixed carrying device for carrying meats during transport.

A typical internal height of a goods transportation cabinet is 3,000 mm. Thus, the quantity of goods that can be carried by a transport cabinet fitted with tubular rail structures is far less than the quantity that can be carried by goods transporting cabinet.

The present invention eliminates the drawback of transport cabinets that are fitted with tubular rail structures.

Accordingly, the present invention relates to an arrangement for hanging loads in transport cabinets intended for trucks and trailers and comprising rail structures from which loads in the form of animal carcasses can be hung and which include a plurality of mutually parallel rails which are supported by ceiling-mounted brackets that extend transversely in relation to the tubes, wherein the rail structures are constructed to support carrier means to which the animal carcasses are attached, characterized in that the rail structures are tubes which can be raised and lowered between an upper position in the close proximity of the ceiling of the cabinet and a lower position in which the rail structures are located at a height above the cabinet floor that will enable the load to be unloaded and offloaded easily and in that the brackets are generally U-shaped brackets are pivotally mounted on the cabinet ceiling; in that the rail structures are pivotally attached to the U-shaped brackets; and in that the arrangement includes a force applying device which functions to apply a pulling force between the transport cabinet and the rail structures.

The invention will now be described in more detail with reference to exemplifying embodiments thereof and also with reference to the accompanying drawing, in which
- Figure 1 illustrates schematically and from one side a transport cabinet with one wall removed and with a ceiling-mounted tubular rail structure in a downwardly dropped position;
- Figure 2 is a sectional view taken on the line B-B in Figure 4 and shows a rear part of the arrangement in larger scale;
- Figure 3 is a schematic illustration of the arrangement shown in Figure 1 with the rail structure in a raised position; and
- Figure 4 is a sectional view taken on the line A-A in Figure 1.

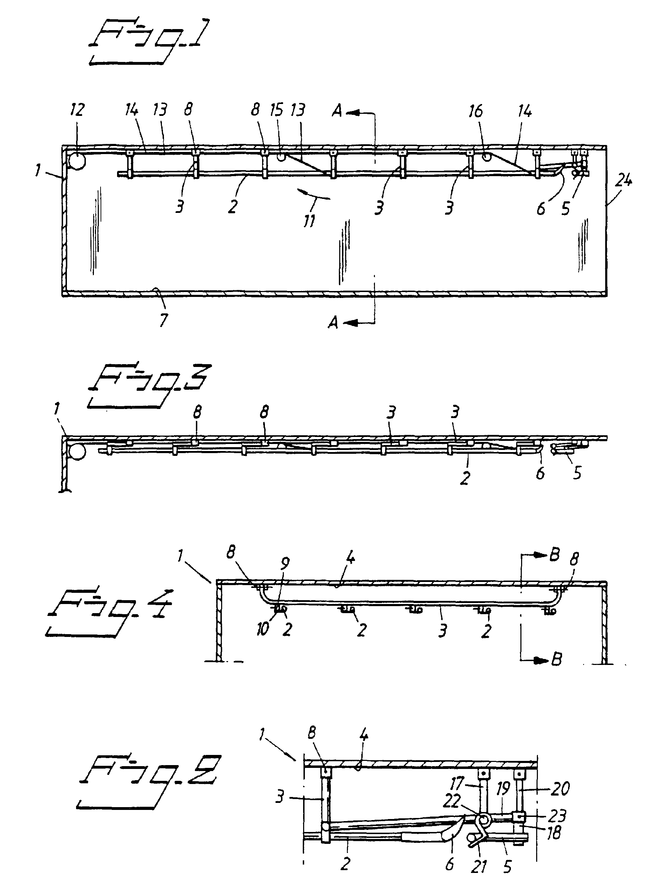

Figure 1 illustrates an arrangement for hanging loads in a transport cabinet 1 for trucks and trailers. The arrangement includes a tubular rail structure from which loads in the form of animal carcasses can be hung. The tubular rail structures include a plurality of mutually parallel tubes 2, see Figure 4, which are supported by U-shaped brackets 3 that extend transversely in relation to the tubes and that are fastened to the cabinet ceiling 4. The tubular rail structures 2 are constructed to support carriers to which the animal carcasses are attached. The carriers include an upper part which runs on the upper side of respective tubes, and a bottom part having a hook means onto which the animal carcasses are hooked.

The arrangement also includes onloading and offloading tubes 5 on which the animal carcasses are rolled into the cabinet with the aid of onloading carriers. The arrangement also includes so-called change-over tubes 6 which are seated at the rear ends of respective tubes 2 and which can be folded down against the onloading and offloading tube and therewith switch from the onloading and offloading tube 5 to a selected tube 2.

The arrangement describes hitherto with reference to the drawings is known to the art.

In the case of the inventive arrangement, the tubular rail structures 2 can be raised and lowered between an upper position in the close proximity of the cabinet ceiling 4 and a lower position in which the rail structures 2 are located at a height above the cabinet floor 7 which will enable the load to be readily onloaded and offloaded.

For instance, the transport cabinet may have an inner height of 3,000 mm. When in its raised position (see Figure 2) the arrangement may have a height of 125 mm measured from the ceiling and downwards. The goods height available will then be 2,875 mm.

When the arrangement is in its lower position, the tubular rails will preferably have a height above the floor of about 2,300 mm to 2,500 mm. This height is determined, of course, by the vertical extension of the U-shaped brackets 3.

According to one preferred embodiment of the invention, the U-shaped brackets 3 are hinged to the cabinet ceiling by means of a hinged attachment 8 of any suitable known kind. The tubular rail structures 2 are also pivotally attached to the U-shaped brackets 3. For instance, there is attached to respective U-shaped brackets a non-rotatable attachment 9 to which an angle iron 10 is pivotally fastened. The angle iron is, in turn, fastened to the underside of respective tubes 2, see Figure 4. The arrangement also includes a force applying device that is constructed to apply a pulling force between the transport cabinet and the tubular rail structures such as to fold the rail structures and the U-shaped brackets upwards (as illustrated by the arrow 11) from the lower position shown in Figure 1 to the upper position shown in Figure 2.

According to one preferred embodiment of the invention, the force applying device is a cabinet-mounted electric winch 12 from which one or more wires 13, 14 extend to the tubular rail structures 2 or to the U-shaped brackets 3 that support said rail structures. In the illustrated case, the winch pulls the wires to the left in Figure 1 when the rail structures are to be raised. The wires will conveniently run over guide pulleys 15, 16.

As before mentioned, the arrangement includes an onloading and offloading tube 5. This tube is located at that end of the rail structures 2 that lies proximal to the cabinet opening 24.

According to one preferred embodiment, the onloading and offloading tube 5 is pivotally carried by a U-shaped bracket 17 that is pivotally mounted on the ceiling of the cabinet. This latter U-shaped bracket 17 is connected to one of the tube carrying U-shaped brackets 3 via link arms 18, 19 which are adapted to raise and lower the onloading and offloading tube synchronously with lowering and raising the tubular rail structures respectively. Figure 2 shows the right-hand part of the arrangement in Figures 1 and 2 in larger scale.

The onloading and offloading tube 5 is non-rotatably attached to a brace 21 that is rotatably attached to the horizontal part 22 of the U-shaped bracket 17. The onloading and offloading tube 5 is also pivotally connected to another brace 20 by means of a pivot joint 23 and via a further brace 18. The brace 20 is pivotally mounted on the ceiling of the cabinet. The brace 20 is also pivotally connected to a link arm 19 which is also pivotally connected to the bracket 3 that is proximal to the brace 20.

When the winch draws the brackets 3 forwards/upwards, i.e. to the left in Figure 2, the bracket 17, the brace 20, the link arm 19 and the onloading and offloading tube 5 will all be moved to the aforesaid upper position.

Thus, the entire arrangement, including the onloading and offloading tube, can be moved to the aforesaid upper and lower positions respectively.

It will therefore be evident that the present invention eliminates the drawbacks mentioned in the introduction.

It will also be evident that the present invention can be modified. For instance, instead of a winch, the force applying device may be an hydraulic piston-cylinder device that acts between the transport cabinet and an appropriate part of the arrangement such as to move said arrangement between said two positions. The onloading and offloading tube and its suspension means may alternatively be manoeuvred by a separate winch or a separate piston-cylinder device.

It will therefore be understood that the present invention is not restricted to the aforedescribed and illustrated exemplifying embodiment thereof and that modifications and variations can be made within the scope of the following Claims.

## Claims

1. An arrangement for hanging loads in transport cabinets (1) intended for trucks and trailers and comprising rail structures (2) from which loads in the form of animal carcasses can be hung and which include a plurality of mutually parallel rails which are supported by ceiling-mounted brackets (3) that extend transversely in relation to the tubes, wherein the rail structures are constructed to support carrier means to which the animal carcasses are attached, **characterized** in that the rail structures are tubes (2) which can be raised and lowered between an upper position in the close proximity of the ceiling (4) of the cabinet (1) and a lower position in which the rail structures are located at a height above the cabinet floor (7) that will enable the load to be unloaded and offloaded easily and in that the brackets are generally U-shaped brackets (3) are pivotally mounted on the cabinet ceiling (4); in that the rail structures (2) are pivotally attached to the U-shaped brackets (3); and in that the arrangement includes a force applying device (12) which functions to apply a pulling force between the transport cabinet (1) and the rail structures (2).

2. An arrangement according to Claim 1, **characterized** by an onloading and offloading tube (5) located at that end of the rail structures (2) that lies proximal to the cabinet opening, wherein the onloading and offloading tube is pivotally supported by a generally U-shaped bracket (17) that is pivotally mounted on the cabinet ceiling; and in that the U-shaped bracket (17) is connected to one of the U-shaped brackets (3) that support the tubes (2) via link arms (21, 18, 20, 19) that are adapted to raise and lower the onloading and offloading tube (5) synchronously with lowering and raising of the rail structures (2) respectively.

3. An arrangement according to Claim 2, **characterized** in that the force applying device is a cabinet-mounted electric winch (12) from which one or more wires (13, 14) extend to the rail structures (2) or to the U-shaped brackets (3) that support the rail structures.

## Patentansprüche

1. Vorrichtung für hängende Lasten in Transportbehältern (1) für Lastkraftwagen und Trailer, mit Schienenstrukturen (2), an denen Ladungen in Form von Tierkörpern eingehängt werden können und die eine Vielzahl von zueinander parallelen Schienen aufweisen, die von deckenmontierten Konsolen (3) getragen werden, die sich quer in Relation zu den Rohren erstrecken, wobei die Schienenstrukturen so konstruiert sind, daß sie Trägereinrichtungen stützen, an denen die Tierkörper befestigt sind, **dadurch gekennzeichnet**, daß die Schienenstrukturen Rohre (2) sind, die zwischen einer oberen Position in nächster Nähe der Decke (4) des Behälters (1) und einer unteren Position, in der die Schienenstrukturen in einer Höhe über dem Behälterboden (7) angeordnet sind, angehoben und abgesenkt werden können, wodurch die Ladung einfach eingeladen und ausgeladen werden kann, und daß die Konsolen im wesentlichen U-förmige Konsolen (3) sind, die an der Behälterdecke (4) schwenkbar befestigt sind, und daß die Schienenstrukturen (2) schwenkbar an den U-förmigen Konsolen (3) befestigt sind, und daß die Anordnung eine kraftausübende Vorrichtung (12) aufweist, die derart funktioniert, daß sie eine Zugkraft zwischen dem Transportbehälter (1) und den Schienenstrukturen (2) appliziert.

2. Vorrichtung nach Anspruch 1, **gekennzeichnet durch** ein Belade- und Entladerohr (5), das an dem Ende der Schienenstrukturen (2) angeordnet ist, das sich in der Nähe der Behälteröffnung befindet, wobei das Belade- und Entladerohr von einer im wesentlichen U-förmigen Konsole (17) schwenkbar getragen wird, die schwenkbar an der Behälterdecke angebracht ist, und daß die U-förmige Konsole (17) mit einer der U-förmigen Konsolen (3) verbunden ist, die die Rohre (2) über Verbindungsarme (21, 18, 20, 19) tragen, die geeignet sind, das Belade- und Entladerohr (5) synchron mit einem Absenken und Anheben der Schienenstrukturen (2) anzuheben und abzusenken.

3. Vorrichtung nach Anspruch 2, **dadurch gekennzeichnet,** daß die krafteinleitende Vorrichtung eine in dem Behälter montierte elektrische Winde (12) ist, von der sich ein oder mehrere Drähte (13, 14) zu den Schienenstrukturen (2) oder zu den U-förmigen Konsolen (3) erstrecken, die die Schienenstrukturen tragen.

## Revendications

1. Dispositif pour suspendre des charges dans des conteneurs de transport (1) destinés à des camions et à des semi-remorques, ce dispositif comprenant des structures de rails (2) auxquelles on peut suspendre des charges se présentant sous la forme de carcasses d'animaux, ces structures comprenant un certain nombre de rails mutuellement parallèles supportés par des consoles (3) montées au plafond et s'étendant transversalement par rapport aux rails, les structures de rails étant construites pour supporter des moyens de support auxquels les carcasses d'animaux sont accrochées,
caractérisé en ce que
- les structures de rails sont des tubes (2) qu'on peut faire monter et descendre entre une position supérieure à proximité immédiate du plafond (4) du conteneur (1), et une position inférieure dans laquelle les structures de rails sont placées, au-dessus du plancher (7) du conteneur, à une hauteur permettant de charger et de décharger facilement la charge, et les consoles sont des consoles (3) généralement en forme de U qui sont montées en pivotement sur le plafond (4) du conteneur,
- les structures de rails (2) sont montées en pivotement sur les consoles (3) en forme de U, et
- le dispositif comprend un dispositif d'application de force (12) qui sert à appliquer une force de traction entre le conteneur de transport (1) et les structures de rails (2).

2. Dispositif selon la revendication 1,
caractérisé en ce qu'
- il comprend un tube de chargement et de déchargement (5) placé à l'extrémité des structures de rails (2) et se situant à proximité de l'ouverture du conteneur, ce tube de chargement et de déchargement (5) étant supporté en pivotement par une console (17) généralement en forme de U, qui est montée en pivotement sur le plafond du con teneur, et
- la console (17) en forme de U est reliée à celle des consoles (3) en forme de U qui supporte les tubes (2) par l'intermédiaire de bras de liaison (21, 18, 20, 19) destinés à faire monter et descendre le tube de chargement et de déchargement (5) respectivement en synchronisme avec l'abaissement et le levage des structures de rails (2).

3. Dispositif selon la revendication 2,
caractérisé en ce que
le dispositif d'application de force est un treuil électrique (12) monté sur le conteneur et d'où partent un ou plusieurs fils (13, 14) allant vers les structures de rails (2) ou vers les consoles (3) en forme de U qui supportent les structures de rails.
